(19) Europäisches Patentamt
European Patent Office
Office européen des brevets

(11) **EP 4 641 432 A1**

(12) # EUROPEAN PATENT APPLICATION

(43) Date of publication:
**29.10.2025 Bulletin 2025/44**

(21) Application number: **25165701.1**

(22) Date of filing: **24.03.2025**

(51) International Patent Classification (IPC):
**G06F 30/20** $^{(2020.01)}$   **G06F 30/398** $^{(2020.01)}$
**G06F 119/18** $^{(2020.01)}$

(52) Cooperative Patent Classification (CPC):
**G06F 30/398;** G06F 2119/18

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.04.2024   KR 20240054250
30.05.2024   KR 20240071016**

(71) Applicant: **Samsung Electronics Co., Ltd.
Suwon-si, Gyeonggi-do 16677 (KR)**

(72) Inventors:
• **KIM, Sungchul
16677 Suwon-si (KR)**

• **KIM, Cheolgyu
16677 Suwon-si (KR)**
• **KIM, Sungjin
16677 Suwon-si (KR)**
• **MA, Boosoo
16677 Suwon-si (KR)**
• **LEE, Youngjoo
16677 Suwon-si (KR)**
• **JANG, Kyunglim
16677 Suwon-si (KR)**
• **JEONG, Narae
16677 Suwon-si (KR)**
• **CHOI, Yoojin
16677 Suwon-si (KR)**

(74) Representative: **Marks & Clerk LLP
15 Fetter Lane
London EC4A 1BW (GB)**

(54) **WARPAGE SIMULATION METHOD BASED ON STRESS HOMOGENIZATION AND DEVICE USING THE SAME**

(57)    A warpage simulation method includes, based on structure information of thin film structures corresponding to a first device cell area of a wafer and a material stress of each of the thin film structures, determining a first stress property equivalent model of the thin film structures by performing stress homogenization on the thin film structures, based on the structure information of the thin film structures corresponding to the first device cell area and a material parameter of each of the thin film structures, determining a first physical property equivalent model of the thin film structures by performing physical property homogenization on the thin film structures, and performing a warpage simulation based on the first stress property equivalent model and the first physical property equivalent model.

FIG. 2

**EP 4 641 432 A1**

**Description**

BACKGROUND

Example embodiments of the disclosure relate to a warpage simulation method based on stress homogenization and an apparatus using the same.

In a manufacturing process of a semiconductor die or a semiconductor package, a warpage problem due to thermal or mechanical stress may occur. The semiconductor warpage problem may significantly affect the reliability and performance of a semiconductor product. For example, the semiconductor warpage may cause a mechanical defect and device characteristic degradation, such as a crack or delamination, and when the semiconductor warpage exceeds an equipment threshold, the process may not proceed. The semiconductor warpage problem may increase as the degree of semiconductor integration increases. For example, a not-and (NAND) flash memory device having a vertical NAND (VNAND) cell array designed to overcome the limitations of down-scaling of the NAND flash memory device may have a high degree of integration and may cause the warpage problem. A warpage simulation may be used to predict the warpage problem in advance in a semiconductor design step.

According to related art warpage simulations, it may be required to secure a physical property value of a material according to the temperature, and since it is impossible to respond to warpage at a specific temperature (e.g., room temperature) without a change in temperature. Thus, a simulation response for urgent decision-making may be difficult. While the complexity of a semiconductor structure increases, performing a warpage simulation by individually considering the influence of a complex semiconductor structure may have practical difficulties due to the limitations of prediction based on manual calculation and a turnaround time (TAT).

Information disclosed in this Background section has already been known to or derived by the inventors before or during the process of achieving the embodiments of the present application, or is technical information acquired in the process of achieving the embodiments. Therefore, it may contain information that does not form the prior art that is already known to the public.

SUMMARY

One or more example embodiments provide a rapid and sophisticated simulation result with material information at a predetermined temperature (e.g., room temperature) without individual consideration of a physical property value of a material according to the temperature or a complex semiconductor structure, based on stress homogenization.

Additional aspects will be set forth in part in the description which follows and, in part, will be apparent from the description, or may be learned by practice of the presented embodiments.

According to an aspect of an example embodiment, a warpage simulation method may include, based on structure information of thin film structures corresponding to a first device cell area of a wafer and a material stress of each of the thin film structures, determining a first stress property equivalent model of the thin film structures by performing stress homogenization on the thin film structures, based on the structure information of the thin film structures corresponding to the first device cell area and a material parameter of each of the thin film structures, determining a first physical property equivalent model of the thin film structures by performing physical property homogenization on the thin film structures, and performing a warpage simulation based on the first stress property equivalent model and the first physical property equivalent model.

According to an aspect of an example embodiment, a warpage simulation method may include setting a plurality of device cell areas to a die area of a wafer, based on structure information of thin film structures corresponding to a first device cell area of the plurality of device cell areas and material stress of each of the thin film structures, determining a stress property equivalent model of the first device cell area by performing stress homogenization on the thin film structures, and performing a warpage simulation based on the stress property equivalent model.

According to an aspect of an example embodiment, an electronic device may include at least one processor, and memory configured to store instructions, where the instructions, when executed by the at least one processor, cause the electronic device to, based on structure information of thin film structures corresponding to a device cell area of a wafer and a material stress of each of the thin film structures, determine a stress property equivalent model of the thin film structures by performing stress homogenization on the thin film structures, based on the structure information of the thin film structures corresponding to the device cell area and a material parameter of each of the thin film structures, determine a physical property equivalent model of the thin film structures by performing physical property homogenization on the thin film structures, and perform a warpage simulation based on the stress property equivalent model and the physical property equivalent model.

Stress homogenization may be the process of determining the overall stress across a region of a structure based on the stress of subregions within the region. Similarly, physical property homogenization may be the process of determining the overall (e.g. average) physical properties across a region of a structure.

At least some of the above and other features of the invention are set out in the claims.

BRIEF DESCRIPTION OF DRAWINGS

The above and other aspects, features, and advantages of certain example embodiments of the present disclosure will be more apparent from the following description taken in conjunction with the accompanying drawings, in which:

FIG. 1 is a diagram illustrating an example of areas of various levels where a warpage simulation is applied, according to one or more embodiments;
FIG. 2 is a diagram illustrating an example of deriving a physical property equivalent model and a stress property equivalent model, according to one or more embodiments;
FIG. 3 is a diagram illustrating an example of a plane stress condition applied to a thin film structure according to one or more embodiments;
FIG. 4 is a diagram illustrating an example of a detailed process of stress homogenization according to one or more embodiments;
FIG. 5 is a diagram illustrating an example of a detailed process of physical property homogenization according to one or more embodiments;
FIG. 6 is a diagram illustrating an example of a physical property homogenization process using a traction boundary condition according to one or more embodiments;
FIG. 7 is a diagram illustrating an example of a warpage simulation processes of various levels according to one or more embodiments;
FIG. 8 is a diagram illustrating an example of a design change process using a warpage simulation according to one or more embodiments;
FIGS. 9A to 9C are diagrams illustrating design change examples for a new scheme according to one or more embodiments;
FIG. 10 is a diagram illustrating an example of a time point when a warpage simulation is used according to one or more embodiments;
FIG. 11 is a diagram illustrating an example of a warpage simulation method based on stress homogenization according to one or more embodiments; and
FIG. 12 is a block diagram illustrating an example of a configuration of an electronic device performing stress homogenization according to one or more embodiments.

DETAILED DESCRIPTION

Hereinafter, example embodiments of the disclosure will be described in detail with reference to the accompanying drawings. The same reference numerals are used for the same components in the drawings, and redundant descriptions thereof will be omitted. The embodiments described herein are example embodiments, and thus, the disclosure is not limited thereto and may be realized in various other forms.

As used herein, expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

It will be understood that when an element or layer is referred to as being "over," "above," "on," "below," "under," "beneath," "connected to" or "coupled to" another element or layer, it can be directly over, above, on, below, under, beneath, connected or coupled to the other element or layer or intervening elements or layers may be present. In contrast, when an element is referred to as being "directly over," "directly above," "directly on," "directly below," "directly under," "directly beneath," "directly connected to" or "directly coupled to" another element or layer, there are no intervening elements or layers present.

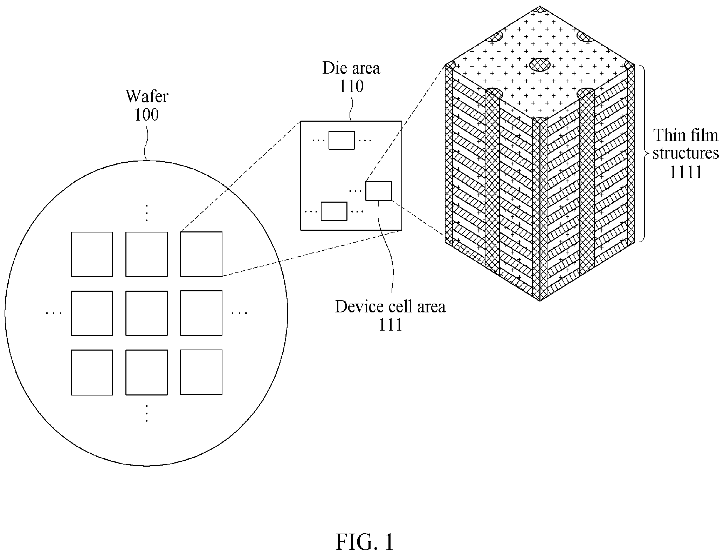

FIG. 1 is a diagram illustrating an example of areas of various levels where a warpage simulation is applied, according to one or more embodiments.

Referring to FIG. 1, a wafer 100 may include die areas, such as a die area 110. The die area 110 may include device cell areas, such as a device cell area 111. A die of the die area 110 may include an integrated circuit (IC) of a semiconductor device and may be packaged as a semiconductor chip. Semiconductor devices may be formed in the device cell area 111. For example, the semiconductor devices may include a vertical not-and (VNAND), but embodiments are not limited thereto. The description of the die area 110 may apply to other die areas and the description of the device cell area 111 may apply to other device cell areas.

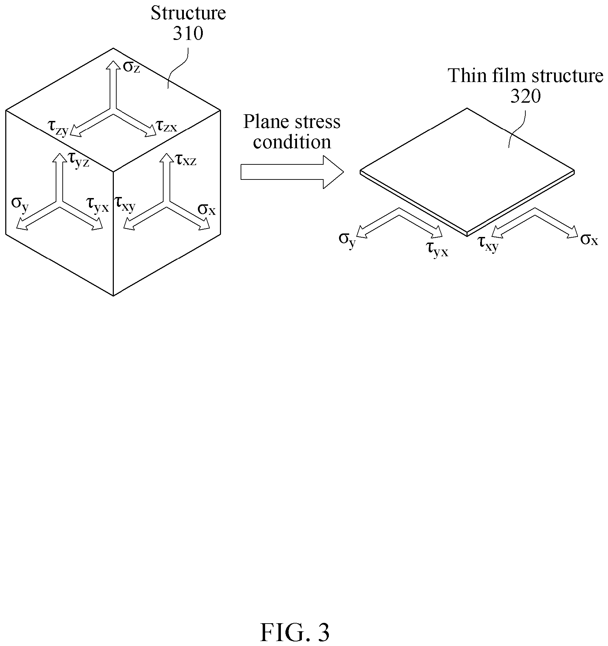

The device cell area 111 may include thin film structures 1111. A thin film structure may be a semiconductor structure to which a plane stress condition may be applied since a length in the longitudinal direction is significantly greater than a length in the lateral direction. For example, the thin film structure may include a thin film and a package, but embodiments are not limited thereto. For example, the thin film may include a non-patterned thin film and a patterned thin film, but embodiments are not limited thereto. The non-patterned thin film may be a non-patterned wafer (NPW) and the patterned thin film may be a pattered wafer. The lateral direction may be a thickness direction of the wafer 100 (e.g., a vertical direction) and the longitudinal direction (e.g., a horizontal direction) may be a direction intersecting the thickness direction. The plane stress condition is further described with reference to FIG. 3.

The thin film structures 1111 may include various materials having various properties. Performing a warpage simulation by individually considering an influence of a complex semiconductor structure while the complexity of a semiconductor structure increases may have a practical difficulty due to the limitation of prediction based on manual calculation and a turnaround time (TAT). A homogenization technique may reduce the difficulty of a warpage simulation by converting various materials into equivalent materials.

The warpage simulation according to one or more embodiments may provide a rapid and sophisticated simulation result with material information at a predetermined temperature (e.g., room temperature) based on stress homogenization without individual consideration of a physical property value of the material according to temperature or a complex semiconductor structure.

According to one or more embodiments, the warpage simulation may be performed on at least one level. For example, the warpage simulation may include a warpage simulation of a device cell level with respect to the device cell areas, such as the device cell area 111, a warpage simulation of a die level with respect to the die areas, such as the die area 110, a warpage simulation of a wafer level with respect to the wafer 100, or a combination thereof. However, embodiments are not limited thereto. For example, a portion of the warpage simulation of the device cell level, a portion of the warpage simulation of the die level, and a portion of the warpage simulation of the wafer level may be omitted or other levels of warpage simulations other than the warpage simulation of the device cell level, the warpage simulation of the die level, and the warpage simulation of the wafer level may be performed.

The warpage simulation of a current level may be performed based on a result of a warpage simulation of a previous level. For example, the warpage simulation of the die level may be performed based on a result of the warpage simulation of the device cell level, and the warpage simulation of the wafer level may be performed based on a result of the warpage simulation of the die level. Based on the warpage simulation of each level, a warpage degree of an area of each level may be predicted. For example, a warpage degree of each device cell area may be predicted based on the warpage simulation of the device cell level with respect to each device cell area, a warpage degree of each die area may be predicted based on the warpage simulation of the die level with respect to each die area, and a warpage degree of the wafer area may be predicted based on the warpage simulation of the wafer level with respect to the wafer area.

A semiconductor manufacturing process may include various detailed processes. The warpage simulation may be performed on at least a portion of the detailed processes. For example, when a design change in a first detailed process among the detailed processes occurs, an assessment of the first detailed process may be performed through the warpage simulation. For example, the design change may include a scheme change, a layout change, a material change, or a combination thereof, but embodiments are not limited thereto. The warpage simulation for the first detailed process may be performed at various levels. For example, the first detailed process may be assessed at each level through warpage simulations of the device cell level, the die level, and the wafer level.

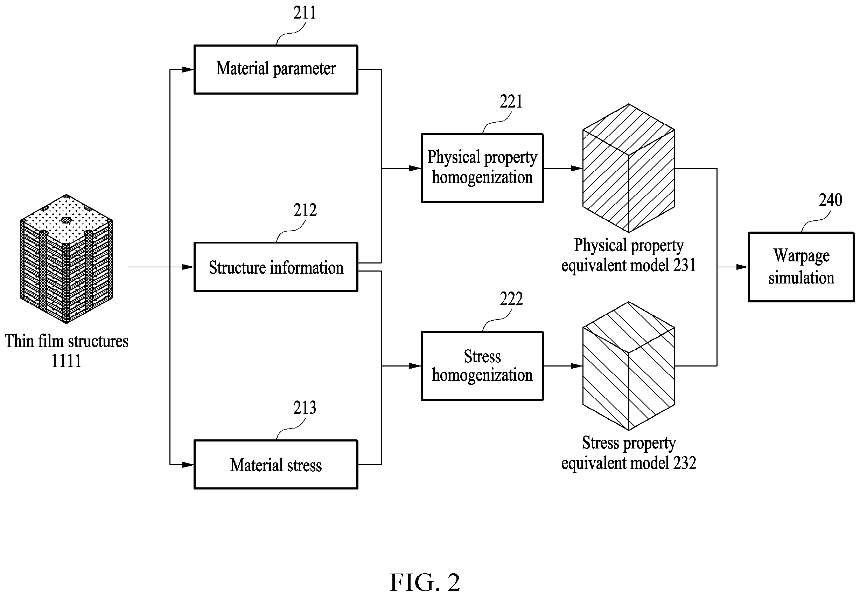

FIG. 2 is a diagram illustrating an example of deriving a physical property equivalent model and a stress property equivalent model, according to one or more embodiments.

Referring to FIG. 2, a physical property equivalent model 231 of the thin film structures 1111 may be determined by performing physical property homogenization 221 on the thin film structures 1111 based on structure information 212 of the thin film structures 1111 and respective material parameters 211 of the thin film structures 1111.

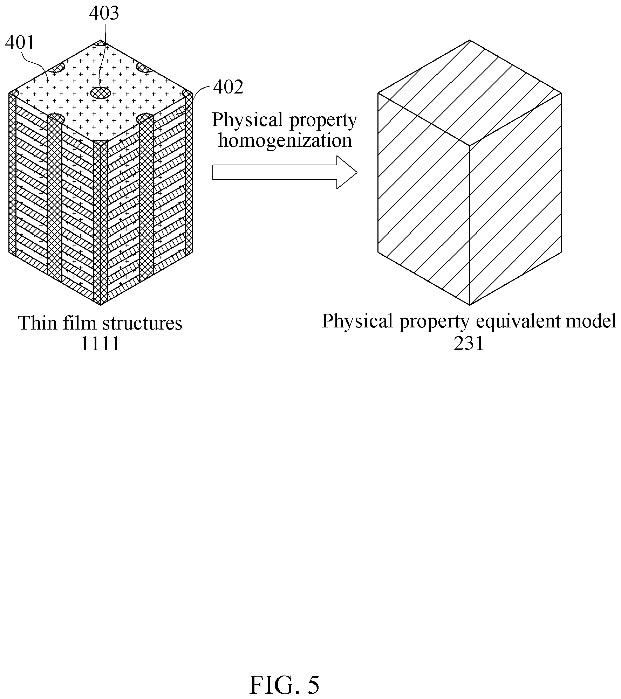

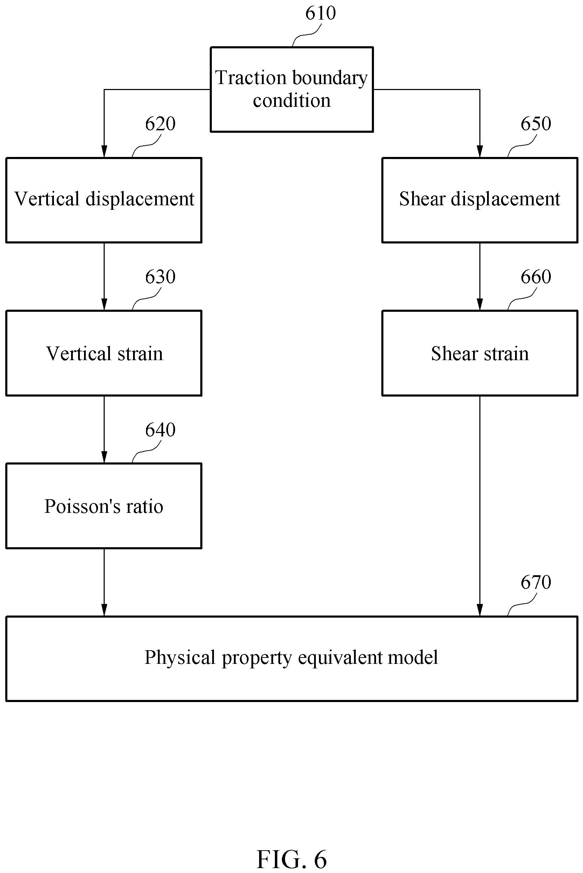

The material parameters 211 may respectively include physical property values of thin film structures 1111. The physical property values may specify physical properties for one or more materials in the thin film structures 1111. For example, the physical property value may include an elastic modulus and a Poisson's ratio. According to one or more embodiments, since the warpage simulation is performed at a predetermined temperature (e.g., room temperature), the physical property value may not include temperature-based information, such as a coefficient of thermal expansion (CTE). The physical property values may correspond to physical properties of the one or more materials at the predetermined temperature. The thin film structures 1111 may have various material parameter values of material parameters 211 of the thin film structures 1111, respectively. The physical property equivalent model 231 may have a single material value according to physical property homogenization 221 with respect to various material parameter values. The thin film structures 1111 may belong to the device cell area of the wafer and the physical property equivalent model 231 of the device cell level of the thin film structures 1111 may be determined through the physical property homogenization 221. The physical property homogenization 221 is further described with reference to FIGS. 5 and 6.

Each of the thin film structures 1111 may include at least one material and the structure information may include an arrangement of at least one material of each of the thin film structures 1111, an amount of at least one material of each of the thin film structures 1111, a volume of at least one material of each of the thin film structures 1111, or a combination thereof. For example, a first thin film structure of the thin film structures 1111 may include a first material and a second material. The arrangement information may represent the arrangement of the first material and the second material in the first thin film structure. The amount information may represent an amount of the first material and the second material in the first thin film structure. For example, when the amount of the first material increases, a volume occupied by the first material in the first thin film structure may increase. As another example, when the thin film structure includes a mixed material of the first material and the second material, a mixing ratio of the first material and the second material may be identified using the amount information of the first material and the second material. The volume information may represent a volume occupied by the first material and the second material in the first thin film structure.

A stress property equivalent model 232 of the thin film structures 1111 may be determined by performing stress homogenization 222 on the thin film structures 1111 based on the structure information 212 of the thin film structures 1111 and a material stress 213 of each of the thin film structures 1111. The thin film structures 1111 may have various material stress values of the material stress 213 of each of the thin film structures 1111, and the stress property equivalent model 232 may have a single material stress value according to the stress homogenization 222 for various material stress values. The material stress 213 of each of the thin film structures 1111 may be stress at a predetermined temperature (e.g., room temperature). The stress property equivalent model 232 of the device cell level of the thin film structures 1111 may be determined through the stress homogenization 222. The material stress 213 may be performed when a stress element is limited in the thickness direction of the wafer of the thin film structures 1111 according to the plane stress condition.

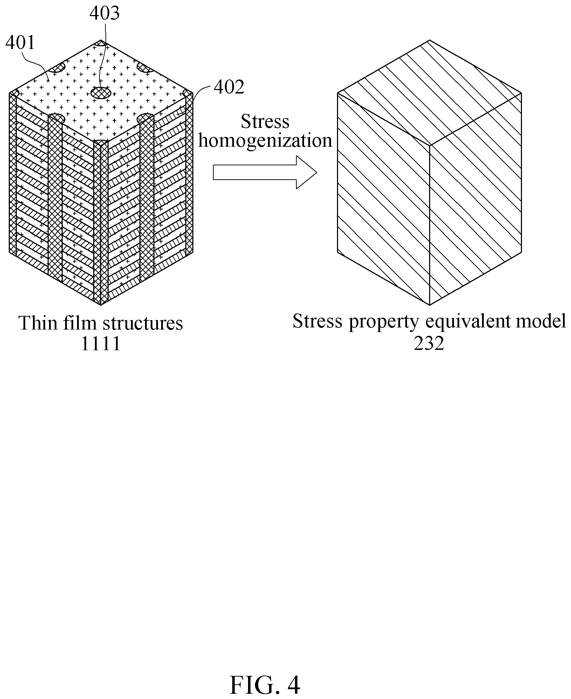

The stress homogenization 222 is further described with reference to FIGS. 3 and 4.

A warpage simulation 240 may be performed based on the stress property equivalent model 232 and the physical property equivalent model 231. For example, a warpage degree corresponding to a strain rate may be predicted by dividing a single stress of the stress property equivalent model 232 by a single physical property value of the physical property equivalent model 231 based on a relationship among the stress, the physical property, and the strain rate. The physical property homogenization 221, the stress homogenization 222, the warpage simulation 240, or a combination thereof may be performed based on a finite element method (FEM) but is not limited thereto.

The warpage simulation 240 may be performed on various levels. For example, various levels may include the device cell level, the die level, the wafer level, or a combination thereof, but embodiments are not limited thereto. For example, by the warpage simulation of a device cell level with respect to a device cell area including the thin film structures 1111, warpage of the device cell level of the thin film structures 1111 of the corresponding device cell area may be determined. By the warpage simulation of a die level with respect to a die area including device cell areas including the corresponding device cell area, warpage of the die level of the device cell areas of the corresponding die area may be determined, and by the warpage simulation of a wafer level with respect to a wafer area including die areas including the corresponding die area, warpage of the wafer level of the die areas of the corresponding wafer area may be determined.

For example, the warpage of the wafer level may be an event in which the entire wafer is bent or distorted due to upper film stress and lower film stress applied to the wafer. X warpage and Y warpage may be determined by the measuring highest points and lowest points in the X-axis direction and the Y-axis direction from a wafer center, respectively, and based on a difference between the X warpage and the Y warpage, an X-Y skew warpage may be determined.

By considering an aspect ratio of the thin film structures 1111 and the wafer, it may be difficult to use a three-dimensional (3D) mesh in a full-scale simulation. According to one or more embodiments, the physical property equivalent model 231 and the stress property equivalent model 232 corresponding to a shell element may be determined by performing the physical property homogenization 221 and the stress homogenization 222 using the 3D mesh, and a simulation may be performed using a 3D version of the shell element. By using the shell element, a TAT of the simulation may decrease, and rapid and efficient process management may be achieved.

FIG. 3 is a diagram illustrating an example of a plane stress condition applied to a thin film structure according to one or more embodiments.

Referring to FIG. 3, the stress of a structure 310 may include stress elements, $\sigma_x$, $\sigma_y$, $\sigma_z$, $\sigma_{xy}$, $\sigma_{xz}$, and $\sigma_{yz}$. $\sigma_x$, $\sigma_y$, and $\sigma_z$ may correspond to normal stress, and $\sigma_{xy}$, $\sigma_{xz}$, and $\sigma_{yz}$ may correspond to shear stress. $\sigma_{xy}$, $\sigma_{xz}$, and $\sigma_{yz}$ may also be written as $\tau_{xy}$, $\tau_{xz}$, and $\tau_{yz}$. $\sigma_{ij}$ may represent stress acting in the j direction across a plane perpendicular to the i direction. $\sigma_{yx}$ may correspond to $\sigma_{xy}$, $\sigma_{zx}$ may correspond to $\sigma_{xz}$, and $\sigma_{zy}$ may correspond to $\sigma_{yz}$. $\sigma_x$ may denote $\sigma_{xx}$, $\sigma_y$ may denote $\sigma_{yy}$, and $\sigma_z$ may denote $\sigma_{zz}$. Normal stress may be stress perpendicular to a surface of the structure 310, or stress perpendicular to a plane or cross-section being considered. Shear stress may be stress that is parallel to a surface of the structure 310, or stress parallel to a plane or cross-section being considered.

Under a plane stress condition, a stress element in the z-direction may be ignored. The z-direction may correspond to the thickness direction of the wafer. The length in the lateral direction (e.g., the z-direction) of a thin film structure 320 may be short enough to be ignored compared to the length in the longitudinal direction (e.g., the x and y directions) of the thin film structure 320. The plane stress condition may be applied to the thin film structure 320. For example, under the plane stress condition, the stress of the thin film structure 320 may include stress elements, $\sigma_x$, $\sigma_y$, and $\sigma_{xy}$. The stress homogenization of thin film structures including the thin film structure 320 and the warpage simulation of the thin film structures may be performed while a stress element in the thickness direction of the wafer of the thin film structures is limited according to the plane stress condition due to the thin film structures.

In the expression of a direction of a stress element, it may be expressed that x=1, y=2, z=3. Under the plane stress condition, $\sigma_{33}=\sigma_{13}=\sigma_{23}=0$ may be satisfied. σ11, σ22, and σ12 may be expressed as Equations (1) to (3) below.

$$\sigma_{11} = \frac{E}{1-v^2}(\varepsilon_{11} + v\varepsilon_{22}) \tag{1}$$

$$\sigma_{22} = \frac{E}{1-v^2}(\varepsilon_{22} + v\varepsilon_{11}) \tag{2}$$

$$\sigma_{12} = \frac{E}{1-v}\varepsilon_{12} = \frac{E}{2(1-v)}\gamma_{12} = G \cdot \gamma_{12} \tag{3}$$

In Equations (1) to (3), E may denote an elastic modulus, v may denote a Poisson's ratio, $\varepsilon_{11}$, $\varepsilon_{22}$, and $\varepsilon_{12}$ may denote strains in each direction, $\gamma$ may denote shear strain (e.g. in a particular direction), and G may denote a shear modulus.

Based on Equations (1) to (3), a stiffness matrix may be expressed as Equation (4) below.

$$\begin{bmatrix} \sigma_{11} \\ \sigma_{22} \\ \sigma_{12} \\ \sigma_{33} \end{bmatrix} = \begin{bmatrix} \dfrac{E}{1-v^2} & \dfrac{vE}{1-v^2} & 0 & 0 \\ \dfrac{vE}{1-v^2} & \dfrac{E}{1-v^2} & 0 & 0 \\ 0 & 0 & \dfrac{E}{1+v} & 0 \\ 0 & 0 & 0 & 0 \end{bmatrix} \begin{bmatrix} \varepsilon_{11} \\ \varepsilon_{22} \\ \varepsilon_{12} \\ \varepsilon_{33} \end{bmatrix} \tag{4}$$

For ease of expression, $\sigma_{13}$ and $\sigma_{23}$ are omitted from the stiffness matrix. A relationship between the strain and stress in the longitudinal direction of the thin film structure 320 may be determined. For example, material stress of the thin film structure 320 may be determined using Equation (4). For example, E and v of the stiffness matrix may be determined from physical property value(s) of the thin film structure 320, and material stress of the thin film structure 320 may be determined based on the stiffness matrix and the strain of the thin film structure 320.

FIG. 4 is a diagram illustrating an example of a detailed process of stress homogenization according to one or more embodiments.

Referring to FIG. 4, the stress property equivalent model 232 corresponding to the thin film structures 1111 may be determined by stress homogenization with respect to the thin film structures 1111.

The stress homogenization may be enabled by a plane stress condition. If the plane stress condition is not used, when obtaining stress from a strain or obtaining a strain from stress, a stress element in the longitudinal direction that does not exist in the thin film structures 1111 may be engaged, and thereby, a calculation result that is different from the actual result may be obtained. The stress element in the longitudinal direction of the thin film structures 1111 may make stress homogenization with respect to the thin film structures difficult.

The thin film structures 1111 may include thin film structures having at least two different material properties. For example, the thin film structures 1111 may include a first type of thin film structure including a first material 401 and a third material 403, and a second type of thin film structure including a second material 402 and the third material 403. The stress homogenization may be performed by combining first material stress of the first type of thin film structure with second material stress of the second type of thin film structure. For example, the stress property equivalent model 232 may be determined by dividing a sum of multiplication results of respective material stresses of the thin film structures 1111 and respective volumes of the thin film structures 1111 by the volume of the device cell area where the thin film structures 1111 belong. The stress property equivalent model 232 may have a single stress.

The material stress of each of the thin film structures 1111 may be experimentally determined through a stress test. For example, in an actual (e.g. real-world) environment and/or a virtual environment, the first material stress and the second material stress may be determined using a strain of each of the first and second types of thin film structures. For example, Equation (4) may be used for the stress test. Each of the thin film structures 1111 may be formed as a non-patterned thin film or a patterned thin film on the wafer. Although FIG. 4 illustrates an example of the thin film structures 1111 of the patterned thin film, the thin film structures 1111 may include a non-patterned thin film. The material stress of each of the thin film structures 1111 may be determined through a stress test in the actual environment and/or the virtual environment for the non-patterned thin film or the patterned thin film. That is, each of the thin film structures 1111 may be manufactured and subjected to forces to measure strain. The strain can then be used to determine the material stress using Equation 4.

For example, the material stress for each thin film structure may be determined independently of the other materials. For instance, for each material, a layer (e.g. a thin film) of the material may be deposited onto a substrate (e.g. a wafer). The stress effect of the thin film can be measured. This may be based on subjecting the thin film and substrate to forces to measure strain. Alternatively or in addition, the stress may be based on the warpage caused by the thin film. For instance, this may be measured based on a difference between the warpage before deposition and the warpage after deposition. The material stress can then be determined based on the warpage caused by the thin film. The material stress may be determined based on the warpage caused by the thin film, the thickness of the substrate and the thickness of the material layer. Accordingly, the material stress for each material may be determined independently for each material based on the warpage caused by thin films of each material.

The stress of each individual material appears irrespective of the particular shape or dimensions of the thin film, as the stress is represented by force/area. Provided that there is no additional chemical bonding or thermal reaction, the stress of the material remains independent of the shape of the thin film. For reference, the total force caused by a film deposited on a wafer can be found by multiplying the wafer's area by the film thickness and by the material stress.

In light of the above, the material stress for each material may be determined by, for each material, depositing a layer (e.g. thin film) of the material onto a substrate and measuring stress based on one or both of the warpage of the substrate and the strain in the substrate. The warpage may be measured using a variety of measuring systems, such as a laser scanning system, an optical profilometer, and/or a micro-electromechanical system. The strain can be measured using a variety of methods, such as x-ray diffraction, electron diffraction, and/or Ramen spectroscopy.

The stress homogenization may be performed based on the material stress. For example, the stress homogenization may be performed using Equation (5) below.

$$\sigma_{homogenization} = \frac{\int_\Omega \sigma \cdot dV}{\int_\Omega dV} = \frac{1}{V_{total}} \int_\Omega \sigma \cdot dV \approx \frac{\sum(\sigma_{element} \cdot V_{element})}{V_{total}} \quad (5)$$

In Equation (5), $\sigma_{homogenization}$ may denote a single stress of the stress property equivalent model 232, $\sigma$ may denote stress, $\Omega$ may denote the entire area of the thin film structures 1111, $V_{total}$ may denote the total volume of the thin film structures 1111 or the volume of a device cell area where the thin film structures 1111 belong, $\sigma_{element}$ may denote material stress of each element, and $V_{element}$ may denote the volume of each element. The element may be each thin film structure of the thin film structures 1111 but is not limited thereto.

The material stress of each of the thin film structures 1111 and the single stress of the stress property equivalent model 232 determined based on the material stress may be stress at a predetermined temperature (e.g., room temperature). The warpage simulation according to one or more embodiments may be performed based on the stress property equivalent model 232 and may be used to predict a warpage degree at a predetermined temperature (e.g., room temperature). The warpage simulation according to one or more embodiments may provide a rapid and sophisticated simulation result at a predetermined temperature (e.g., room temperature) based on stress homogenization without individual consideration of a physical property value of the material according to temperature or a complex semiconductor structure.

FIG. 5 is a diagram illustrating an example of a detailed process of physical property homogenization according to one or more embodiments.

Referring to FIG. 5, the physical property equivalent model 231 corresponding to the thin film structures 1111 may be determined by physical property homogenization with respect to the thin film structures 1111.

At least a portion of an area of the thin film structures 1111 may be set to a representative volume element (RVE) and the physical property homogenization may be performed using the RVE. The RVE may be set to represent the physical property of the thin film structures 1111 (e.g. the physical property of a particular volume/region of the thin film structure). For example, the thin film structures 1111 may include the first material 401, the second material 402, and the third material 403, and the RVE may be set to include the first material 401, the second material 402, and the third material 403. In the stress homogenization, similar to the physical property homogenization, a partial element of the thin film structures 1111, such as the RVE, may be used.

The RVE may be defined by various physical property values of various materials, such as the first material 401, the second material 402, and the third material 403. The physical property equivalent model 231 may be determined through the physical property homogenization using the physical property value of the RVE. The physical property equivalent model 231 may be defined by a single physical property value. The physical property value of the RVE may be experimentally determined. For example, in the actual environment and/or the virtual environment, the physical property value of the RVE may be determined through an experiment using the physical property values of various materials of the RVE and/or various boundary conditions. FIG. 6 may be an example of an experiment to determine the physical property value of the RVE.

FIG. 6 is a diagram illustrating an example of a physical property homogenization process using a traction boundary condition according to one or more embodiments.

Referring to FIG. 6, a traction boundary condition 610 may be set based on the materials of an RVE. The traction boundary condition 610 may define tractions (e.g. forces) applied on the surfaces of the RVE. The traction boundary condition 610 may define external forces applied to the materials of the RVE to induce stresses. The traction boundary condition 610 may be set automatically, based on the materials of the RVE, or based on user input. According to the traction boundary condition 610, actual and/or virtual tensile stress and/or compressive stress may be applied to the RVE. A vertical displacement 620 and a shear displacement 650 may be derived (e.g. measured) according to the applied stress . For instance, a structure comprising an RVE may be manufactured and tested in a real-world environment to determine vertical and shear displacements. This may include the application of tractions (forces) to the RVE and measurement of respective displacements. Alternatively, the vertical and shear displacements may be determined through a simulation. A vertical strain 630 and a shear strain 660 may be derived based on the vertical displacement 620 and the shear displacement 650. A Poisson's ratio 640 may be determined based on the vertical strain 630. The Possion's ratio may represent the ratio of the transverse (e.g. shear) strain to the axial (e.g. vertical) strain. A physical property equivalent model 670 of the RVE may be determined based on the vertical strain 630, the Poisson's ratio 640, and the shear strain 660.

A thermal element, such as a temperature boundary condition, may be further considered to derive the physical property equivalent model 670, but embodiments are not limited thereto. The warpage simulation according to one or more embodiments may provide a rapid and sophisticated simulation result with material information at a predetermined temperature (e.g., room temperature) without individual consideration of a physical property value of a material according to the temperature, based on the stress homogenization.

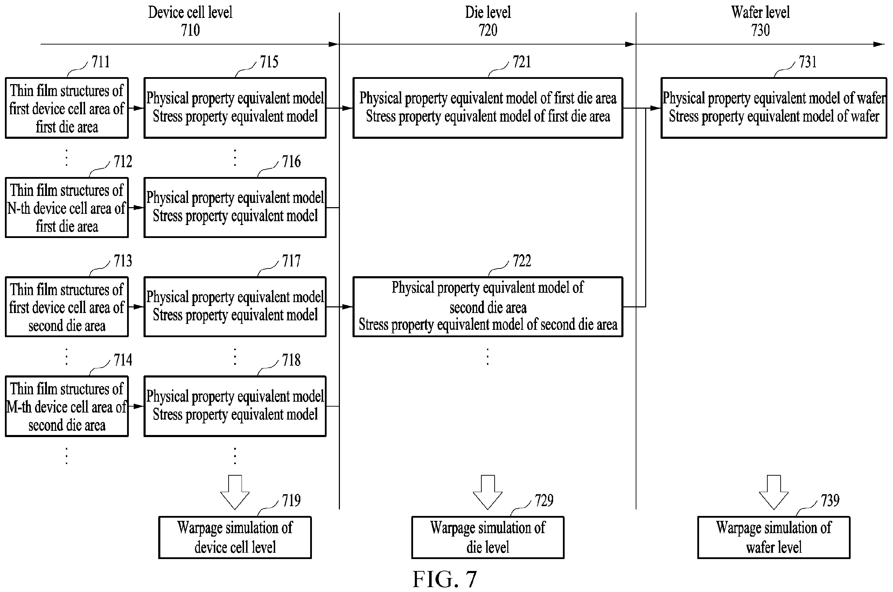

FIG. 7 is a diagram illustrating an example of warpage simulation processes of various levels according to one or more embodiments.

Referring to FIG. 7, warpage simulations of a device cell level 710, a die level 720, and a wafer level 730 may be performed. However, FIG. 7 is an example and embodiments are not limited thereto. For example, a portion of the warpage simulations of the device cell level 710, the die level 720, and the wafer level 730 may be omitted or other levels of warpage simulations other than the device cell level 710, the die level 720, and the wafer level 730 may be performed. In the present context, "level" may represent the size of the area or volume being simulated. For instance, a wafer area may comprise multiple die areas, and each die area may comprise multiple device cell areas. Device cell level simulation may be a simulation for each device cell area. Die level simulation may be a simulation for each die area. Wafer level simulation may be a simulation for a wafer area.

The warpage simulation of a current level may be performed based on a result of a warpage simulation of a previous level. The simulation may be performed in an order moving from smaller levels to larger levels. For example, a warpage simulation of the die level 720 may be performed based on a result of a warpage simulation of the device cell level 710, and a warpage simulation of the wafer level 730 may be performed based on a result of the warpage simulation of the die level 720.

The wafer area may include die areas, and each die area may include device cell areas. An equivalent model of each device cell area may be determined through homogenization of thin film structures of each device cell area. For example, a first die area of the wafer area may include first to N-th device cell areas, and a second die area of the wafer area may include first to M-th device cell areas. In operations 711 and 712, the homogenization may be performed on each thin film structure of the first to N-th device cell areas of the first die area, and in operations 715 and 716, the equivalent model may be determined. The homogenization may include physical property homogenization and stress homogenization, and the equivalent model may include a physical property equivalent model and a stress property equivalent model. In operations 713 and 714, the homogenization may be performed on each thin film structure of the first to M-th device cell areas of the second die area, and in operations 717 and 718, the equivalent model may be determined. In operation 719, the warpage simulation of the device cell level 710 with respect to each device cell area may be performed using the equivalent model of the thin film structures of each device cell area.

An equivalent model of each die area may be determined through homogenization of the equivalent models of the device cell areas of each die area. For example, in operations 721 and 722, equivalent models of the first and second die areas may be determined. The equivalent model of the first die area may be determined by performing homogenization on the equivalent models of the first to N-th device cell areas of the first die area, and the equivalent model of the second die area may be determined by performing homogenization on the equivalent models of the first to M-th device cell areas of the second die area. In operation 729, the warpage simulation of the die level 720 with respect to each die area may be performed using the equivalent model of each die area.

In operation 731, an equivalent of the wafer may be determined. The equivalent model of the wafer may be determined by performing homogenization on the equivalent models of the die areas of the wafer including the first die area and the second die area. In operation 739, the warpage simulation of the wafer level 730 may be performed using the equivalent model of the wafer area.

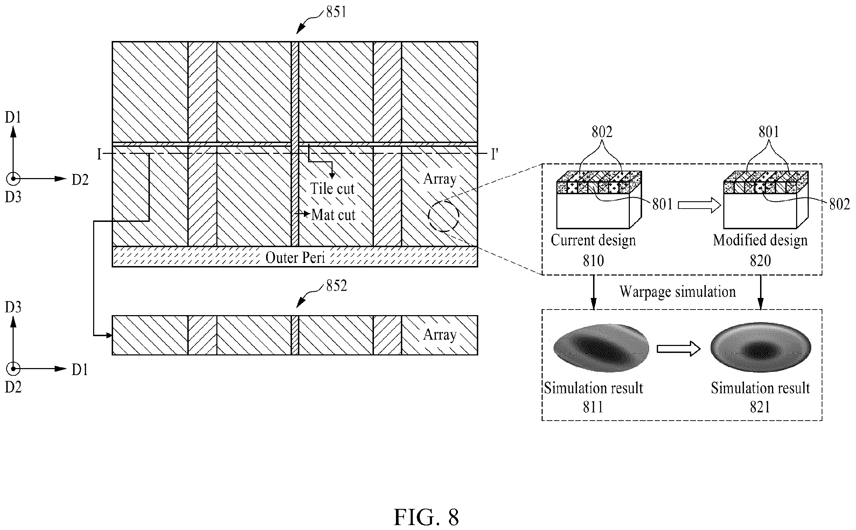

FIG. 8 is a diagram illustrating an example of a design change process using a warpage simulation according to one or more embodiments.

Referring to FIG. 8, a plan view 851 of a layout of a die area and a cross-sectional view 852 of a cross-section I-I' of a die area are illustrated. For example, the plan view 851 may include various design elements, such as an array, a tile cut, a mat cut, and an outer perimeter (peri). A mat cut may be a vertical cut within a structure to isolate two regions (known as mats) from each other. The mat cut may prevent the stress within the structure transferring between the two regions (mats).

For example, the array may include memory devices, but embodiments are not limited thereto. For example, when a design of a memory device is changed, a possibility of a warpage problem may be predicted through a warpage simulation. For example, an arrangement of materials 801 and 802 of a current design 810 of a memory device may be different from an arrangement of the materials 801 and 802 of a modified design 820. For instance, a relative position, size, etc. of the materials may be changed. A simulation result 811 of the current design 810 may be compared with a simulation result 821 of the modified design 820, and based on a comparison result, whether to maintain the modified design 820 and an additional change in the modified design 820 may be considered. If the design is modified, a semiconductor device according to the modified design may be manufactured.

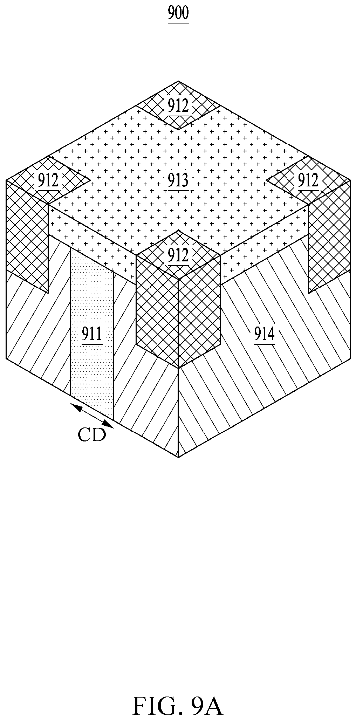

FIGS. 9A to 9C are diagrams illustrating design change examples for a new scheme according to one or more embodiments.

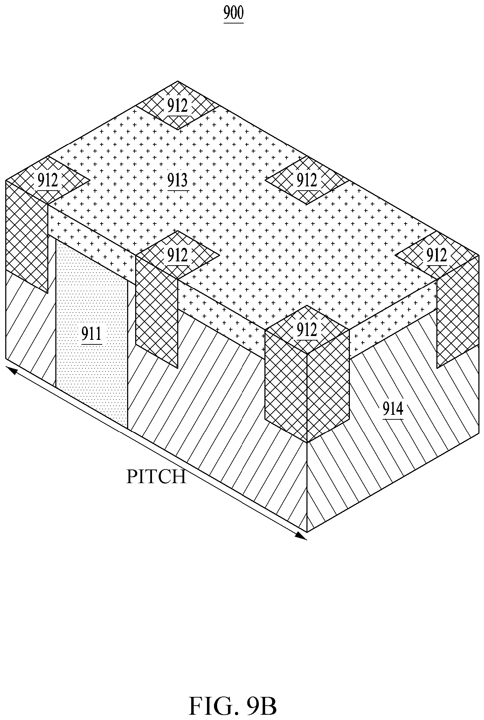

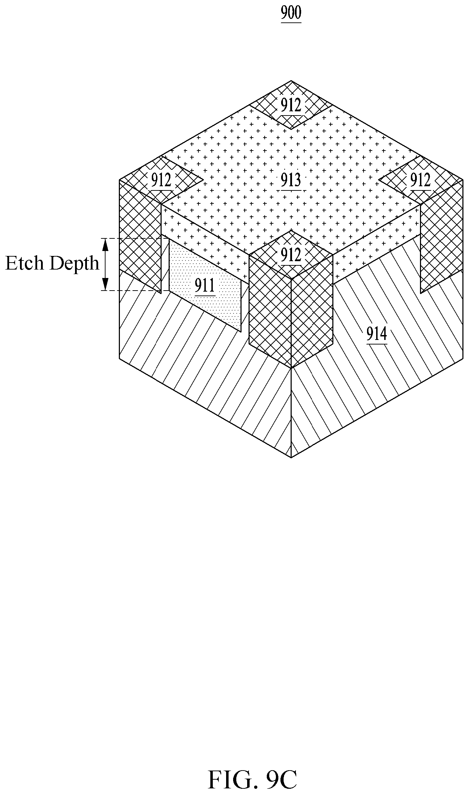

Referring to FIGS. 9A to 9C, a thin film structure 900 including silicon nitride 911, a copper pad 912, a dummy pad 913, and nitrogen oxide 914 is illustrated. FIG. 9A illustrates a modification example of a critical dimension (CD) of the silicon nitride 911, FIG. 9B illustrates a modification example of a pitch between cuts of patterns including the thin film structure 900, and FIG. 9C illustrates a modification example of an etch depth of the silicon nitride 911. The pitch between cuts of FIG. 9B may be a distance between a center of a component (in this case, the silicon nitride 911) of the thin film structure 900 and a center of an equivalent component (the silicon nitride) of another thin film structure adjacent to the thin film structure 900. FIGS. 9A to 9C are examples and are not limited thereto. The design may be changed through the modification examples of FIGS. 9A to 9C and an influence of the design change may be predicted through a warpage simulation.

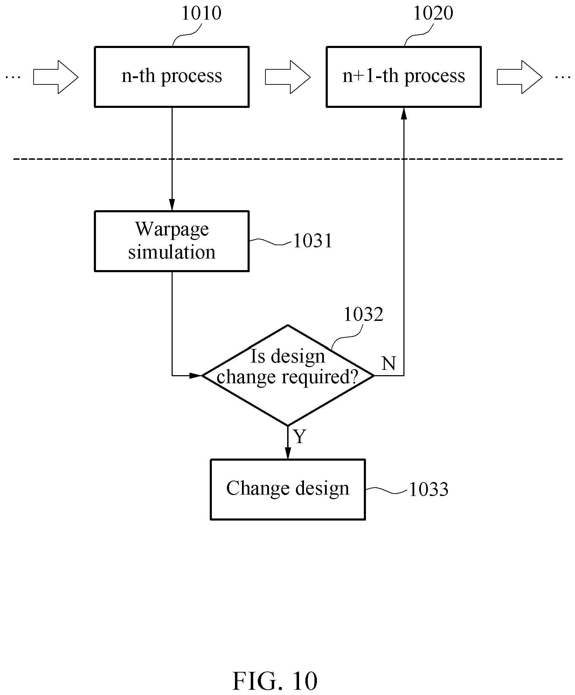

FIG. 10 is a diagram illustrating an example of a time point when a warpage simulation is used according to one or more embodiments.

Referring to FIG. 10, a warpage simulation may be used in association with n-th and n+1-th processes 1010 and 1020 of a semiconductor manufacturing process. The n-th and n+1-th processes 1010 and 1020 may correspond to arbitrary detailed processes (e.g. steps) of the semiconductor manufacturing process.

The warpage simulation according to one or more embodiments may be used to predict warpage with respect to a wafer when the wafer is exposed to room temperature after the n-th process 1010 and before the n+1-th process 1020. For example, when a wafer is exposed to room temperature after the n-th process 1010 is completed, in operation 1031, a warpage simulation may be performed on the wafer. Based on a simulation result, in operation 1032, the need for a design change may be determined. For example, when a warpage degree exceeds a threshold and it is difficult to perform the n+1-th process 1020, it may be determined that a design change is necessary (Y in operation 1032). In this case, in operation 1033, the design may be changed. If it is determined that the design change is unnecessary (N in operation 1032), the n+1-th process 1020 may be performed.

If the design is changed, the method may go back to operation 1031 to simulate the warpage for the new design (e.g. at the end of the n-th process and before the n+1-th process). The new design may be assessed to see if further changes are required (e.g. operation 1032). Once an acceptable design has been determined (i.e. no design change is required), the design for the n+1-th process may be determined. The design process may continue, until a design of a completed (e.g. fully manufactured) semiconductor device is determined. Each time the wafer is to be exposed to room temperature between processes the method of FIG. 10 may be repeated.

Following the determination of an acceptable design (N from operation 1032), a semiconductor device may be manufactured according to the determined design. This may be without further modification of the design (e.g. for later process steps), or may be after a determination of designs the later process steps (e.g. where the design is a design of an intermediate structure that is manufactured prior to the final completion of manufacturing).

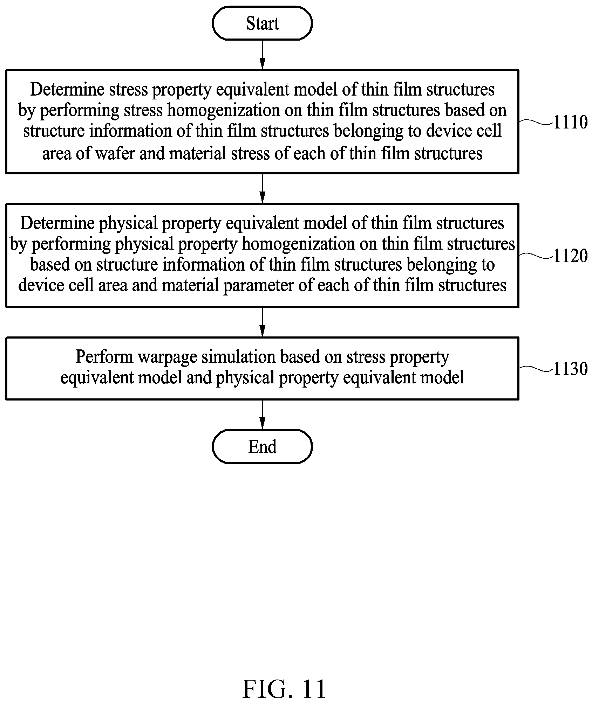

FIG. 11 is a diagram illustrating an example of a warpage simulation method based on stress homogenization according to one or more embodiments.

Referring to FIG. 11, in operation 1110, a stress property equivalent model of thin film structures may be determined by performing stress homogenization on the thin film structures based on structure information of the thin film structures belonging to a device cell area of a wafer and material stresses of the thin film structures. In operation 1120, a physical property equivalent model of the thin film structures may be determined by performing physical property homogenization on the thin film structures based on the structure information of the thin film structures belonging to the device cell area and material parameters of the thin film structures. In operation 1130, a warpage simulation may be performed based on the stress property equivalent model and the physical property equivalent model.

The stress homogenization and warpage simulation may be performed while a stress element of the thin film structures in the thickness direction of the wafer is limited according to a plane stress condition due to the thin film structures.

The material stresses of the thin film structures may be stresses at a predetermined temperature. The predetermined temperature may include room temperature. Room temperature may be, for instance, a temperature in the range of 20°C to 22°C (e.g. 20°C).

Operation 1110 may include an operation of determining the stress property equivalent model by dividing a sum of multiplication results of the material stresses of the thin film structures and the volumes of the thin film structures by the volume of the device cell area.

Each of the thin film structures may include at least one material. The structure information may include an arrangement of at least one material of each of the thin film structures, an amount of at least one material of each of the thin film structures, a volume of at least one material of each of the thin film structures, or a combination thereof.

The warpage of a device cell level of the thin film structures may be determined by the warpage simulation.

The wafer may include a die area including the device cell area and other device cell areas. In this case, additional stress property equivalent models of other device cell areas and additional physical property equivalent models of other device cell areas may be determined. The stress property equivalent model of the die level of the thin film structures of the die area may be determined by performing stress homogenization of the die level on the stress property equivalent model and the additional stress property equivalent models. The physical property equivalent model of the die level of the thin film structure of the die area may be determined by performing physical property homogenization of the die level on the physical property equivalent model and the additional physical property equivalent models. A warpage simulation of the die level may be performed using the stress property equivalent model of the die level and the physical property equivalent model of the die level.

The wafer may include a die area and other die areas. In this case, additional stress property equivalent models of other die areas and physical property equivalent models of other die areas may be determined. The stress property equivalent model of the wafer level of the thin film structures of the wafer may be determined by performing stress homogenization of the wafer level on the stress property equivalent model of the die area and the stress property equivalent models of other die areas. The physical property equivalent model of the wafer level of the thin film structures of the wafer may be determined by performing stress homogenization of the wafer level on the stress property equivalent model of the die area and the stress property equivalent models of other die areas. A warpage simulation of the wafer level may be performed using the stress property equivalent model of the wafer level and the physical property equivalent model of the wafer level.

The thin film structures may be formed as a non-patterned thin film or a patterned thin film on the wafer. The material stresses of the thin film structures may be determined through a stress test on the non-patterned thin film or the patterned thin film.

While FIG. 11 shows step S1110 being performed before S1120, the order of these steps may be changed (e.g. step S1120 may be performed before S1110), or these steps may be performed in parallel.

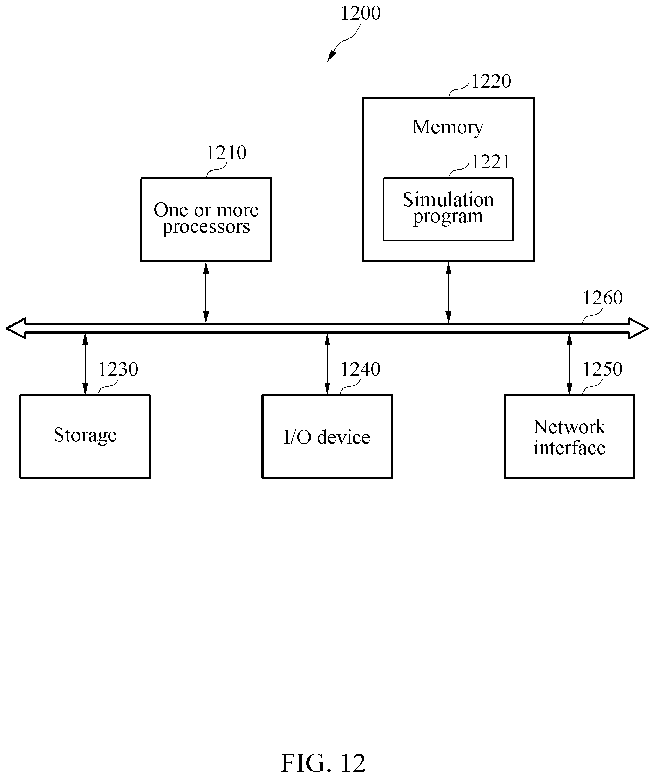

FIG. 12 is a block diagram illustrating an example of a configuration of an electronic device performing stress homogenization according to one or more embodiments.

Referring to FIG. 12, an electronic device 1200 may include one or more processors 1210, a memory 1220, a storage 1230, an input/output (I/O) device 1240, and a network interface 1250. These components may communicate with each other via a communication bus 1260.

The one or more processors 1210 may execute instructions stored in the memory 1220 or the storage 1230. When executed by the one or more processors 1210, the instructions may cause the electronic device 1200 to perform the operations described with reference to FIGS. 1 to 11. The memory 1220 may include a computer-readable storage medium or a computer-readable storage device. The memory 1220 may store instructions to be executed by the one or more processors 1210 and may store related information while software and/or an application is being executed by the electronic device 1200. The memory 1220 may store a simulation program 1221 configured to perform a warpage simulation according to one or more embodiments. When at least a portion of the simulation program 1221 is stored in the memory 1220, the operations described with reference to FIGS. 1 to 11 may be performed by the electronic device 1200.

The storage 1230 may include a computer-readable storage medium or a computer-readable storage device. The storage 1230 may store a larger quantity of information than the memory 1220 for a long time. For example, the storage 1230 may include a magnetic hard disk, an optical disc, a flash memory, a floppy disk, or other non-volatile memories known in the art.

The I/O device 1240 may receive an input from the user in traditional input manners through a keyboard and a mouse, and in new input manners such as a touch input, a voice input, and an image input. For example, the I/O device 1240 may include a keyboard, a mouse, a touch screen, a microphone, or any other device that detects the input from the user and transmits the detected input to the electronic device 1200. The I/O device 1240 may provide an output of the electronic device 1200 to the user through a visual, auditory, or haptic channel. The I/O device 1240 may include, for example, a display, a touch screen, a speaker, a vibration generator, or any other device that provides the output to the user. The network interface 1250 may communicate with an external device through a wired or wireless network.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to one or more embodiments, the module may be implemented in a form of an application-specific integrated circuit (ASIC).

Various embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to one or more embodiments, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

At least one of the devices, units, components, modules, units, or the like represented by a block or an equivalent indication in the above embodiments including, but not limited to, FIGS. 1, 2 and 12 may be physically implemented by analog and/or digital circuits including one or more of a logic gate, an integrated circuit, a microprocessor, a microcontroller, a memory circuit, a passive electronic component, an active electronic component, an optical component, and the like, and may also be implemented by or driven by software and/or firmware (configured to perform the functions or operations described herein).

A warpage simulation according to one or more embodiments may provide a rapid and sophisticated simulation result with material information at a predetermined temperature (e.g., room temperature) without individual consideration of a physical property value of a material according to the temperature or a complex semiconductor structure, based on stress homogenization.

Embodiments described herein enable efficient simulation of a semiconductor device to determine warpage without requiring the individual simulation of substructures forming a complex semiconductor structure. This allows the design of the semiconductor device to be tested more quickly using fewer computing resources and less energy. Multiple designs may be tested using the simulation method, and a design with improved warpage characteristics may be selected based on these tests.

The selected design may by output for use in manufacturing a semiconductor device according to the selected design. The output may be in the form of instructions (or multiple sets of instructions) for instructing one or more machines to manufacture a semiconductor device according to the selected design. The instructions may be computer-executable instructions for controlling one or more machines to manufacture a semiconductor device according to the selected design. In addition, or alternatively, the selected design may be output (e.g. displayed or output to an external system) for use by a user in manufacturing a semiconductor device according to the selected design.

Each of the embodiments provided in the above description is not excluded from being associated with one or more features of another example or another embodiment also provided herein or not provided herein but consistent with the disclosure.

While the disclosure has been particularly shown and described with reference to embodiments thereof, it will be understood that various changes in form and details may be made therein without departing from the scope of the following claims.

## Claims

1.  A warpage simulation method comprising:

    based on structure information of thin film structures corresponding to a first device cell area of a wafer and a material stress of each of the thin film structures, determining a first stress property equivalent model of the thin film structures by performing stress homogenization on the thin film structures;
    based on the structure information of the thin film structures corresponding to the first device cell area and a material parameter of each of the thin film structures, determining a first physical property equivalent model of the thin film structures by performing physical property homogenization on the thin film structures; and
    performing a warpage simulation based on the first stress property equivalent model and the first physical property equivalent model.

2.  The warpage simulation method of claim 1, wherein the stress homogenization and the warpage simulation are performed while a stress element of the thin film structures in a thickness direction of the wafer is limited based on a plane stress condition of the thin film structures.

3.  The warpage simulation method of claim 1 or claim 2, wherein the material stress of each of the thin film structures corresponds to a stress at a predetermined temperature.

4.  The warpage simulation method of claim 3, wherein the predetermined temperature comprises room temperature.

5.  The warpage simulation method of any preceding claim, wherein the determining of the first stress property equivalent model comprises:
    dividing a sum of multiplication results respectively between the material stress of each of the thin film structures and a volume of each of the thin film structures, by a volume of the first device cell area.

6.  The warpage simulation method of any preceding claim, wherein the structure information comprises at least one of an arrangement of a material of each of the thin film structures, an amount of the material of each of the thin film structures, and a volume of the material of each of the thin film structures.

7.  The warpage simulation method of any preceding claim, wherein a warpage of a device cell level of the thin film structures is determined by the warpage simulation.

8.  The warpage simulation method of any preceding claim, wherein the wafer comprises a first die area comprising the first device cell area and second device cell areas, and
    wherein the method further comprises:

    determining second stress property equivalent models of the second device cell areas and second physical property equivalent models of the second device cell areas;

determining a third stress property equivalent model of a die level of thin film structures of the first die area by performing stress homogenization of the die level on the first stress property equivalent model and the second stress property equivalent models;

determining a third physical property equivalent model of the die level of the thin film structures of the first die area by performing physical property homogenization of the die level on the first physical property equivalent model and the second physical property equivalent models; and

performing a warpage simulation of the die level using the third stress property equivalent model of the die level and the third physical property equivalent model of the die level.

9. The warpage simulation method of claim 8, wherein the wafer comprises the first die area and second die areas, and wherein the method further comprises:

determining fourth stress property equivalent models of the second die areas and fourth physical property equivalent models of the second die areas;

determining a fifth stress property equivalent model of a wafer level of thin film structures of the wafer by performing stress homogenization of the wafer level on the third stress property equivalent model of the first die area and the fourth stress property equivalent models of the second die areas;

determining a fifth physical property equivalent model of the wafer level of thin film structures of the wafer by performing stress homogenization of the wafer level on the third stress property equivalent model of the first die area and the fourth stress property equivalent models of the second die areas; and

performing a warpage simulation of the wafer level using the fifth stress property equivalent model of the wafer level and the fifth physical property equivalent model of the wafer level.

10. The warpage simulation method of any preceding claim, wherein the material stress of each of the thin film structures is determined based on a stress test.

11. An electronic device comprising:

at least one processor; and

memory configured to store instructions,

wherein, when executed by the at least one processor, the instructions cause the electronic device to:

based on structure information of thin film structures corresponding to a device cell area of a wafer and a material stress of each of the thin film structures, determine a stress property equivalent model of the thin film structures by performing stress homogenization on the thin film structures,

based on the structure information of the thin film structures corresponding to the device cell area and a material parameter of each of the thin film structures, determine a physical property equivalent model of the thin film structures by performing physical property homogenization on the thin film structures, and

perform a warpage simulation based on the stress property equivalent model and the physical property equivalent model.

12. The electronic device of claim 11, wherein the stress homogenization and the warpage simulation are performed while a stress element of the thin film structures in a thickness direction of the wafer is limited based on a plane stress condition of the thin film structures.

13. The electronic device of claim 11 or claim 12, wherein the material stress of each of the thin film structures corresponds to a stress at a predetermined temperature.

14. The electronic device of any of claims 11-13, wherein, when executed by the at least one processor, the instructions further cause the electronic device to determine the stress property equivalent model by dividing a sum of multiplication results respectively between the material stress of each of the thin film structures and a volume of each of the thin film structures by a volume of the device cell area.

15. The electronic device of any of claims 11-14, wherein the structure information comprises at least one of an arrangement of a material of each of the thin film structures, an amount of the material of each of the thin film structures, and a volume of the material of each of the thin film structures.

Wafer
100

Die area
110

Device cell area
111

Thin film
structures
1111

FIG. 1

FIG. 2

FIG. 3

403

401

402

Stress
homogenization

Thin film structures
1111

Stress property equivalent model
232

FIG. 4

403

401

402

Physical property
homogenization

Thin film structures
1111

Physical property equivalent model
231

FIG. 5

610

Traction boundary
condition

620

Vertical displacement

650

Shear displacement

630

Vertical strain

660

Shear strain

640

Poisson's ratio

670

Physical property equivalent model

FIG. 6

Device cell level 710

711 Thin film structures of first device cell area of first die area

... 712 Thin film structures of N-th device cell area of first die area

713 Thin film structures of first device cell area of second die area

... 714 Thin film structures of M-th device cell area of second die area

...

715 Physical property equivalent model / Stress property equivalent model

... 716 Physical property equivalent model / Stress property equivalent model

717 Physical property equivalent model / Stress property equivalent model

... 718 Physical property equivalent model / Stress property equivalent model

... 719 Warpage simulation of device cell level

Die level 720

721 Physical property equivalent model of first die area / Stress property equivalent model of first die area

722 Physical property equivalent model of second die area / Stress property equivalent model of second die area

... 729 Warpage simulation of die level

Wafer level 730

731 Physical property equivalent model of wafer / Stress property equivalent model of wafer

739 Warpage simulation of wafer level

FIG. 7

FIG. 8

900

FIG. 9A

900

FIG. 9B

FIG. 9C

FIG. 10

Start

Determine stress property equivalent model of thin film structures by performing stress homogenization on thin film structures based on structure information of thin film structures belonging to device cell area of wafer and material stress of each of thin film structures ⌐~1110

Determine physical property equivalent model of thin film structures by performing physical property homogenization on thin film structures based on structure information of thin film structures belonging to device cell area and material parameter of each of thin film structures ⌐~1120

Perform warpage simulation based on stress property equivalent model and physical property equivalent model ⌐~1130

End

FIG. 11

1200

1220

Memory

1221

Simulation
program

1210

One or more
processors

1260

1230

Storage

1240

I/O device

1250

Network
interface

FIG. 12

Europäisches
Patentamt
European
Patent Office
Office européen
des brevets

# EUROPEAN SEARCH REPORT

**Application Number**

EP 25 16 5701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIN Y H ET AL: "A Novel Methodology to Predict Process-Induced Warpage in Advanced BEOL Interconnects", 2023 IEEE INTERNATIONAL RELIABILITY PHYSICS SYMPOSIUM (IRPS), IEEE, 26 March 2023 (2023-03-26), pages 1-4, XP034343233, DOI: 10.1109/IRPS48203.2023.10117795 [retrieved on 2023-05-15] * Sec. I, II, III, V; figures 5,6 * | 1-10,12, 14,15 | INV. G06F30/20 G06F30/398 ADD. G06F119/18 |
| X | GREGORY T. OSTROWICKI ET AL: "A stress-based effective film technique for wafer warpage prediction of arbitrarily patterned films", 2014 IEEE 64TH ELECTRONIC COMPONENTS AND TECHNOLOGY CONFERENCE (ECTC), 1 May 2014 (2014-05-01), pages 821-828, XP055557101, DOI: 10.1109/ECTC.2014.6897380 ISBN: 978-1-4799-2407-3 * Sec. 1, 2, 3; figures 1, 2, 4 * | 1-10, 12-15 | |
| A | SUN GUOLI ET AL: "Warpage Prediction of Wafer-Level Interposer Packaging Using Equivalent Model", 2022 23RD INTERNATIONAL CONFERENCE ON ELECTRONIC PACKAGING TECHNOLOGY (ICEPT), IEEE, 10 August 2022 (2022-08-10), pages 1-5, XP034181629, DOI: 10.1109/ICEPT56209.2022.9872621 [retrieved on 2022-09-09] * Sec. 3; figure 6 * | 1-15 | |

**TECHNICAL FIELDS SEARCHED (IPC)**

G06F

The present search report has been drawn up for all claims

| Place of search | Date of completion of the search | Examiner |
|---|---|---|
| Munich | 1 August 2025 | Lampmann, Arne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)